# FASCICULE DE BREVET EUROPEEN

(11) **EP 1 805 936 B1**
(45) Date de publication et mention de la délivrance du brevet: **12.08.2009**
(21) Numéro de dépôt: 05809280.0
(22) Date de dépôt: 14.10.2005
(51) Int. Cl.: H04L 12/24

(54) **PROCEDE, SYSTEME ET DISPOSITIF D'ADMINISTRATION RESEAU**
VERFAHREN, SYSTEM UND VORRICHTUNG ZUR NETZWERKVERWALTUNG
METHOD, SYSTEM AND DEVICE FOR NETWORK ADMINISTRATION

(30) Priorité: 25.10.2004 FR 0411357
(43) Date de publication de la demande: 11.07.2007
(73) Titulaire: FRANCE TELECOM, 75015 Paris (FR)
(72) Inventeur: STEPHAN, Emile, Ile Grande, -22560 Pleumeur Bodou (FR)
(74) Mandataire: Loisel, Bertrand
(86) Numéro de dépôt international: PCT/FR2005/002559
(87) Numéro de publication internationale: WO 2006/045918

(56) Documents cités:
- WO-A-02/079983
- US-A- 5 291 583
- US-B1- 6 519 635

## Description

La présente invention est relative au domaine de l'administration des équipements adaptés pour accéder à un réseau de communication.

Généralement, un réseau comprend des équipements à administrer ainsi qu'un dispositif pour administrer ces équipements.

Une administration de réseau est basée sur des échanges d'informations entre le dispositif d'administration et les équipements à administrer. Ainsi, le dispositif peut transmettre des commandes à un ou plusieurs équipements de réseau pour requérir notamment des modifications de paramètres de configuration ou simplement pour consulter certains paramètres de configuration des équipements de réseau. En général, les équipements de réseau ainsi sollicités modifient les paramètres sur réception d'une requête de modification, ou transmettent des informations requises sur réception d'une requête d'informations. Les équipements du réseau sont également adaptés pour transmettre au dispositif d'administration spontanément des informations d'administration comme notamment des informations relatives à des alarmes.

Les données ainsi échangées doivent être compréhensibles par l'émetteur et par le récepteur. A cet effet, on utilise classiquement une modélisation de référence de telles informations d'administration dans un réseau, appelée MIB pour « Management Information Base » en anglais.

Une MIB spécifie une modélisation d'informations d'administration sous la forme d'objets à administrer relatifs aux paramètres à consulter, aux paramètres à modifier ou encore aux alarmes à transmettre. Ces objets sont spécifiés sous la forme d'un arbre d'enregistrement d'objets par l'ISO (pour «International Organization for Standardization »). Une référence est ainsi attribuée à chaque objet spécifié dans la MIB.

En fonction du type d'administration souhaité, on peut se référer à une partie seulement de l'arbre de la MIB, à laquelle on fera référence dans les sections suivantes par les termes « partie de MIB ».

La MIB contient des objets individuels scalaires, que l'on peut instancier une seule fois au maximum, et des regroupements d'objets que l'on peut instancier un nombre de fois variable, ces derniers étant alors classiquement représentés sous la forme de tables pour lesquelles chaque ligne représente une instance de ce regroupement d'objets. Chaque ligne est alors identifiée par un index:

Généralement, dans un réseau d'administration, les équipements et le dispositif d'administration ont la connaissance de la partie de MIB suivant laquelle il gère leurs propres données d'administration. Ainsi, on administre classiquement un réseau, sur la base d'une modélisation de ce type dont la connaissance est partagée par le dispositif d'administration et par les équipements de réseau à administrer.

Un protocole standardisé tel que SNMP, pour «Simple Network Management Protocol », est généralement utilisé pour transmettre ces informations entre les équipements et le dispositif d'administration. Un tel protocole est adapté pour échanger des données d'administration relatives à des objets spécifiés en MIB, mais il occupe une bande passante de transmission considérable dans le réseau. En effet, environ 75% de la taille de chaque message correspond à des références ASN.1 / BER, pour 'Abstract Syntax Notation 1' / 'Basic Encoding Rule'.

Le document US 6 519 635 décrit un réseau basé sur un tel protocole SNMP, dans lequel des données reçues depuis un agent maître dans un format selon SNMP sont traduites dans un format propriétaire. Toutefois, une telle traduction ne permet pas une grande flexibilité.

La présente invention vise à accroître encore la flexibilité de la gestion des informations d'administration dans un réseau.

Un premier aspect de la présente invention propose un procédé pour administrer un équipement par un dispositif d'administration dans un réseau de communication.

Le dispositif d'administration gère une base de données d'administration sous la forme d'objets à administrer référencés selon une spécification de référence.

L'équipement échange des données d'administration sous la forme de structures de données indiquées par des patrons, chacun correspondant respectivement à un objet référencé et étant affecté d'un identifiant respectif.

Pour administrer un objet donné, le dispositif d'administration et l'équipement mémorisent au moins une même information de synchronisation associant la référence de l'objet donné et l'identifiant du patron correspondant.

Le procédé comprend, pour administrer l'objet donné les étapes suivantes :
- transmettre, depuis l'équipement à destination du dispositif d'administration, le patron correspondant affecté de l'identifiant respectif, et au moins un ticket de données ayant une structure indiquée par ledit patron et affecté dudit identifiant;
- traduire le patron reçu par le dispositif d'administration en l'objet référencé respectif en fonction de ladite information de synchronisation; puis, sur la base de la traduction, stocker les données du ticket reçu dans la base de données d'administration du dispositif.

Les termes « objet » font référence à une modélisation d'une ressource à administrer dans le réseau telle qu'un logiciel ou encore un élément matériel d'un équipement du réseau par exemple.

Grâce à ces dispositions, un dispositif d'administration est en mesure d'administrer un équipement de réseau qui remonte des données d'administration au dispositif sous une forme différente de la spécification de référence. En effet, sur la base de l'information de synchronisation qui est connue et partagée par le dispositif d'administration et l'équipement et qui associe l'identifiant d'un patron donné et la référence de l'objet correspondant, le dispositif est en mesure de recevoir et de traiter des données d'administration reçues depuis l'équipement, qui n'utilise pas la spécification de référence pour gérer et traiter les données administratives. Ainsi, l'équipement envoie des données relatives à un objet administré par transmission d'un patron respectif, suivi de tickets de données correspondant. Le dispositif d'administration détermine alors l'objet auquel sont relatives les données des tickets reçues, en fonction de l'identifiant du patron et de l'information de synchronisation mémorisée. Par conséquent, à partir des informations de synchronisation partagées par le dispositif d'administration et l'équipement, l'équipement et le dispositif d'administration sont en mesure d'échanger des données d'administration.

De telles caractéristiques offrent une grande flexibilité de gestion administrative dans un réseau.

Dans un mode de réalisation de la présente invention, le dispositif d'administration transmet également des patrons et des tickets de données à destination de l'équipement. Dans ce cas, le procédé comprend en outre, pour administrer l'objet donné, les étapes suivantes :
- traduire, par le dispositif d'administration, l'objet donné en le patron respectif affecté de l'identifiant respectif, en fonction de l'information de synchronisation respective;
- transmettre, depuis le dispositif d'administration à destination de l'équipement, ledit patron affecté de l'identifiant respectif, et au moins un ticket de données ayant une structure indiquée par ledit patron et affecté dudit identifiant ;
- recevoir et stocker sur l'équipement les données du ticket reçu, directement en fonction du patron affecté dudit identifiant que ledit ticket.

Une telle architecture permet une administration complète d'équipements qui ne connaissent pas la spécification de référence utilisée par le dispositif d'administration, en ce qui concerne les objets pour lesquels des informations de synchronisation sont partagées par l'équipement et le dispositif d'administration. En effet, le dispositif peut transmettre alors en outre des requêtes d'administration telles qu'une modification de paramètres ou encore une requête d'informations aux équipements en transmettant des patrons et des tickets de données. Puis, les équipements sont en mesure de traiter directement ces requêtes d'administration reçues sous une telle forme pour gérer leurs données d'administration.

De tels équipements peuvent avantageusement être plus simples et de ce fait moins coûteux que des équipements comprenant la spécification de référence. En outre, on peut ainsi avantageusement réduire la bande passante de transmission dans le réseau utilisée pour les échanges de données administratives.

Ainsi, lorsque la spécification de référence est une partie de MIB déterminée, l'équipement administré peut ne pas avoir connaissance de cette modélisation d'objets, et de ce fait, on peut prévoir qu'une exportation de ses données d'administration selon la MIB vers une autre entité du réseau, via le protocole SNMP par exemple, soit réalisée par l'intermédiaire du dispositif d'administration.

Avantageusement, l'équipement à administrer n'ayant pas connaissance de la MIB, peut ne pas avoir non plus connaissance du protocole SNMP. Des équipements à administrer encore plus simples et moins coûteux peuvent donc être réalisés.

L'information de synchronisation peut être reçue et mémorisée au démarrage du dispositif d'administration et/ou au démarrage de l'équipement, ou encore périodiquement.

L'équipement peut également indiquer au dispositif d'administration l'information de synchronisation selon les étapes suivantes :
- depuis l'équipement, respectivement depuis le dispositif d'administration, transmettre un patron de synchronisation indiquant un champ relatif à une référence d'objet et un autre champ relatif à un identifiant de patron ; et transmettre un ticket de synchronisation comprenant la référence de l'objet donné et un identifiant du patron respectif associé;
- mémoriser les données du ticket de synchronisation reçues par le dispositif d'administration, respectivement par l'équipement.

Dans un mode de réalisation de la présente invention, l'équipement gère en outre des données d'administration sous la forme d'objets à administrer référencés selon la spécification de référence. Dans ce cas, l'équipement traduit en outre, avant l'étape de transmission, l'objet à administrer en le patron respectif affecté d'un identifiant déterminé en fonction de l'information de synchronisation.

Un deuxième aspect de la présente invention propose un système d'administration d'équipement dans un réseau de communication comprenant, d'une part un dispositif d'administration gérant une base de données d'administration sous la forme d'objets à administrer, lesdits objets étant référencés selon une spécification de référence, et d'autre part un équipement administré échangeant des données d'administration sous la forme de structures de données indiquées par des patrons, chacun correspondant respectivement à un objet référencé et étant affecté d'un identifiant respectif; dans lequel le dispositif d'administration et l'équipement administré comprennent chacun :
- une mémoire adaptée pour mémoriser au moins une information de synchronisation associant l'identifiant d'un patron et la référence d'un objet correspondant;
- une unité d'interface adaptée pour transmettre et/ou recevoir un patron affecté d'un identifiant et au moins un ticket de données ayant une structure indiquée par ledit patron affecté dudit identifiant;
et dans lequel le dispositif comprend en outre :
- un traducteur comprenant des moyens agencés pour traduire un patron reçu en l'objet référencé respectif en fonction de l'identifiant dudit patron et de ladite information de synchronisation.

Un troisième aspect de la présente invention propose un traducteur comprenant des moyens agencés pour opérer dans un équipement selon le deuxième aspect de l'invention.

Un quatrième aspect de l'invention propose un dispositif d'administration de réseau gérant une base de données d'administration sous la forme d'objets à administrer référencés selon une spécification de référence. Le dispositif est adapté pour administrer un équipement échangeant des données d'administration sous la forme de structures de données indiquées par des patrons, chacun correspondant respectivement à un objet référencé et étant affecté d'un identifiant respectif.
Le dispositif comprend :
- une mémoire adaptée pour mémoriser des informations de synchronisation associant l'identifiant d'un patron et la référence d'un objet correspondant;
- une unité d'interface adaptée pour transmettre et/ou recevoir un patron affecté d'un identifiant et au moins un ticket de données ayant une structure indiquée par ledit patron et affecté dudit identifiant;
- un traducteur adapté pour traduire un patron reçu en l'objet référencé respectif en fonction de l'identifant dudit patron et des informations de synchronisation.

Un cinquième aspect propose un équipement de réseau destiné à être administré par un dispositif d'administration gérant une base de données d'administration sous la forme d'objets à administrer, lesdits objets étant référencés selon une spécification de référence.
L'équipement échange des données d'administration sous la forme de structures de données indiquées par des patrons, chacun correspondant respectivement à un objet référencé et étant affecté d'un identifiant respectif.
L'équipement comprend :
- une mémoire pour mémoriser des informations de synchronisation associant l'identifiant d'un patron et la référence d'un objet correspondant;
- une unité d'interface pour transmettre et/ou recevoir un patron affecté d'un identifiant et au moins un ticket de données ayant une structure indiquée par ledit patron et affecté dudit identifiant.

D'autres aspects, buts et avantages de l'invention apparaîtront à la lecture de la description d'un de ses modes de réalisation.

L'invention sera également mieux comprise à l'aide des dessins, sur lesquels :
- la figure 1 est un schéma d'un système selon un mode de réalisation de la présente invention ;
- la figure 2 illustre une correspondance entre une traduction de format de données d'administration selon un mode de réalisation de la présente invention;
- la figure 3 illustre un ticket de synchronisation selon un mode de réalisation de la présente invention;
- la figure 4 illustre un patron et un ticket de données respectif selon un mode de réalisation de la présente invention ;
- la figure 5 illustre un procédé d'administration selon un mode de réalisation de la présente invention.

Une mise en oeuvre d'un mode de réalisation de l'invention dans le cas où les données d'administration sont émises par l'équipement à destination du dispositif d'administration offre avantageusement la flexibilité d'utiliser un protocole de type IPFIX pour des remontées d'alarmes depuis l'équipement vers le dispositif. Ce type de protocole, bien connu de l'homme du métier, est classiquement utilisé dans un service global d'analyse de flux transitant par des équipements de réseaux de transmission de paquets, notamment des routeurs et des commutateurs de type IP, ATM, Ethemet ou encore MPLS (pour MultiProtocol Label Switching). Un tel service fournit une analyse des flux entrant dans un équipement.

Les sections suivantes, à titre d'exemple, décrivent un système dans lequel des données d'administration peuvent également être transmises depuis le dispositif à destination de l'équipement selon un mode de réalisation de l'invention

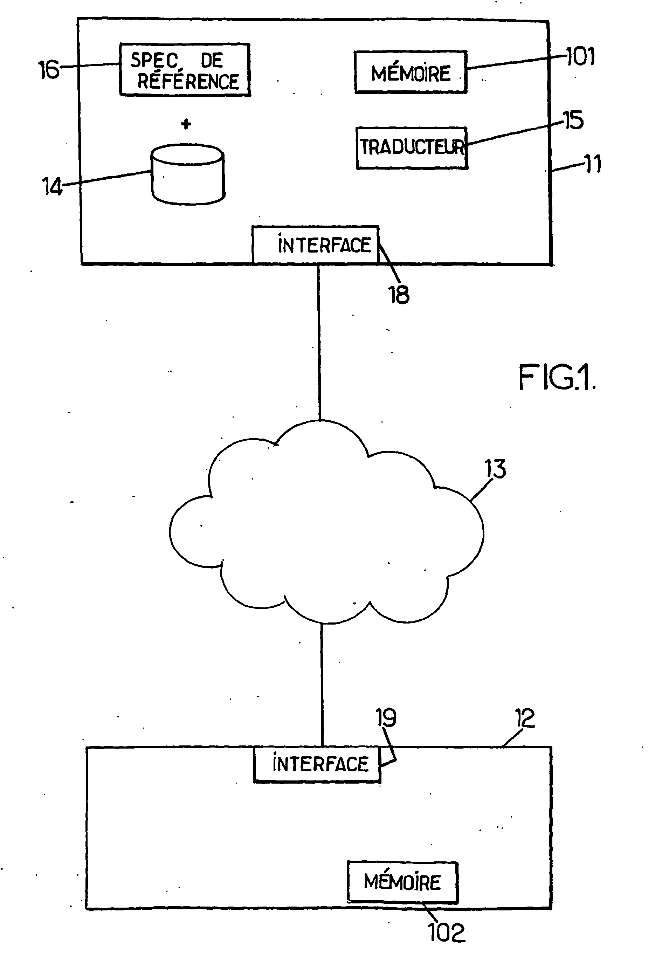

La figure 1 illustre un dispositif d'administration 11 et un équipement 12 à administrer via un réseau 13 selon un mode de réalisation de la présente invention.

Le dispositif 11 comprend une base d'information d'administration 14 gérée selon une spécification de référence 16. Généralement, on utilise une base de données d'administration spécifiées selon une partie de MIB. Le dispositif 11 comprend en outre un traducteur 15 adapté pour traduire des données reçues de l'équipement 12 en données selon la spécification de référence, et vice-versa. Ainsi, le dispositif 11 est capable de recevoir et de traiter des données reçues depuis l'équipement 12 pour notamment stocker ces données dans la base de données 14.

Le dispositif d'administration comprend en outre une unité d'interface 18 en charge de recevoir les messages depuis l'équipement 12. Elle est de préférence également en charge de transmettre des données à destination de l'équipement 12. Le dispositif comprend également une mémoire 101 adaptée pour mémoriser des informations de synchronisation communes à l'équipement et au dispositif d'administration.

De préférence, le dispositif d'administration et l'équipement partagent des informations de synchronisation mémorisées relatives aux objets référencés à administrer qui correspondent à tout ou parties des ressources à administrer sur l'équipement 12.

L'équipement 12 stocke des données d'administration. Ces données sont gérées sous la forme de structures de données indiquées dans des patrons. L'équipement 11 comprend en outre une unité d'interface 19 en charge de transmettre des données à destination du dispositif d'administration 11. Elle est de préférence également en charge de recevoir des données depuis le dispositif d'administration 11. Une telle unité d'interface 19 d'un équipement peut stocker des données à exporter, puis, exporter ces données lorsque certains critères d'exportation sont remplis. Les critères d'exportation de données peuvent être fonction du type d'équipement, de la nature de la partie de la MIB concernée ou encore de contraintes d'exploitation d'applications clientes.

L'équipement 12 comprend également une mémoire 102 adaptée pour mémoriser les informations de synchronisation communes.

Dans un mode de réalisation de la présente invention, l'équipement 12 n'a pas connaissance de la partie de MIB 16 et les données d'administration sont échangées à travers le réseau 13 par transmission de patrons et de tickets de données ayant une structure indiquée par les patrons correspondants.

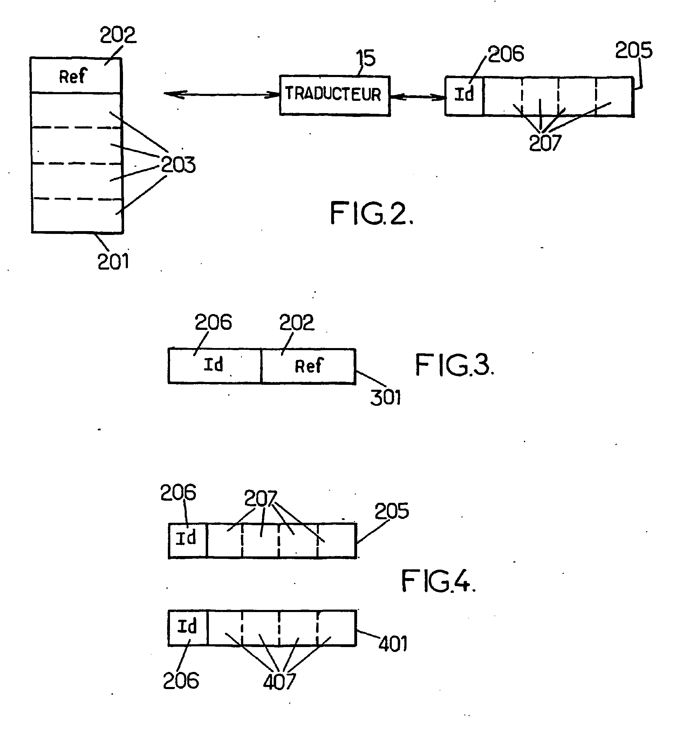

La figure 2 illustre une traduction par un traducteur 15 selon un mode de réalisation de l'invention entre un objet 201 spécifié selon la spécification de référence et un patron 205 indiquant les structures de données gérées par l'équipement 12.

La traduction est réalisée par le traducteur 15 en fonction des informations de synchronisation mémorisées dans la mémoire 101. Ainsi, à partir de l'objet 201 affecté d'une référence 202, et comprenant des champs d'informations 203, on obtient via le traducteur le patron 205 affecté d'un identifiant 206 et comprenant des champs d'information 207 dérivés des champs d'information 203. L'identifiant 206 est déterminé en fonction des informations de synchronisation..

On note qu'un traducteur selon un mode de réalisation de l'invention n'est pas inclus dans l'équipement puisque dans l'exemple illustratif l'équipement n'a pas connaissance de la partie de MIB et n'a donc pas à utiliser un tel traducteur.

Puis, à partir d'un patron affecté d'un identifiant déterminé, le traducteur est en mesure de réaliser une traduction en l'objet respectif correspondant à ce patron. Ainsi, le traducteur détermine une référence d'objet en fonction de l'identifiant du patron reçu et des informations de synchronisation. Puis, à partir de cette référence, le traducteur détermine l'objet correspondant au patron reçu.

La figure 3 illustre un ticket de synchronisation selon un mode de réalisation de la présente invention. Un tel ticket 301 comprend un identifiant de patron 206 et une référence 202 d'objet. Ainsi, sur la base d'un tel ticket, on peut corréler des patrons et des objets.

La figure 4 illustre un patron 205 et un ticket 401 de données respectif selon un mode de réalisation de la présente invention. De préférence, le patron indique un format et une sémantique des champs 407 du ou des tickets de donnée respectifs. Le patron et le ticket de données sont affectés du même identifiant 206.

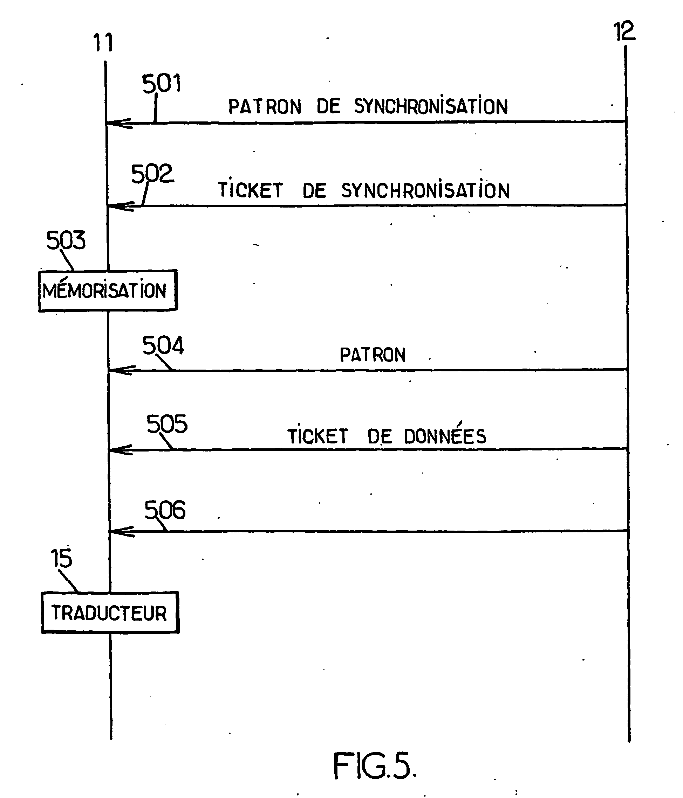

Un ticket de synchronisation peut être émis par une entité extérieure au réseau, ou par le dispositif d'administration ou encore par l'équipement. La figure 5 illustre un mode de réalisation de la présente invention dans le cas où le ticket de synchronisation est émis par l'équipement 12. Dans un mode de réalisation de la présente invention, l'équipement 11 ne connaît pas la spécification de référence. Il stocke en mémoire les informations de synchronisation. La présente invention couvre les différentes possibilités pour fournir à l'équipement ces informations de synchronisation.

Afin de partager ces informations avec le dispositif d'administration 11, l'équipement 12 envoie un patron de synchronisation 501 suivi d'un ticket de synchronisation 502 à destination du dispositif d'administration 11. Le dispositif 11 mémorise 503 ces informations de synchronisation. Un patron de synchronisation est un patron spécifique, et donc reconnaissable, puisqu'il ne se rapporte à aucun objet de la spécification de référence.

Dans un mode de réalisation de la présente invention, l'équipement envoie un ticket de synchronisation pour chacune des informations de synchronisation qu'il souhaite partager avec le dispositif d'administration.

Puis, lorsque par exemple l'équipement 12 souhaite remonter une alarme, il émet à destination du dispositif 11 un patron 504 indiquant le format des tickets 505,506 de données relatives à l'alarme qui vont suivre.

Ensuite, le traducteur 15 détermine l'objet spécifié auquel se rapporte le patron reçu, comme cela est décrit précédemment. Puis, les données reçues dans les tickets 505, 506 affectés du même identifiant sont interprétées en se référant aux champs d'informations du patron et de l'objet déterminé.

A titre illustratif, dans les sections suivantes, on décrit une modification de paramètres de configuration d'un équipement par un dispositif d'administration selon un mode réalisation de la présente invention.

Ainsi, un opérateur configure un équipement du réseau qui n'a pas accès à la partie de MIB.

Dans un tel cas, un opérateur envoie au dispositif d'administration, via le protocole SNMP, une commande de configuration comprenant de nouveaux paramètres relatifs à un objet donné, si l'objet est individuel, ou, le cas échéant relatifs à une instance déterminée d'un objet spécifié donné.

Sur réception de ces paramètres reçus selon la spécification MIB, le dispositif d'administration traduit les données reçues de l'opérateur afin de générer un patron correspondant. Puis, il envoie à l'équipement le patron relatif à l'objet donné. Il envoie ensuite un ou plusieurs tickets de données qui indiquent les paramètres reçus. Lorsque les nouveaux paramètres à envoyer concernent plusieurs instances d'un objet, plusieurs tickets de données sont alors émis, préférablement un ticket pour chacune des instances de l'objet affectée d'une valeur d'index. Le patron comprend alors un champ relatif à un index et chaque ticket indique la valeur de l'index correspondant à l'instance de l'objet à laquelle correspondent les données du ticket.

Sur réception du patron puis des tickets de données, l'équipement gère directement les données reçues.

Un opérateur peut également requérir une exportation de données d'administration relatives à un objet administré de l'équipement 12, en envoyant un message de requête selon le protocole SNMP au dispositif d'administration 11. Dans un tel cas, le dispositif 11 peut interroger l'équipement 12 après traduction des données reçues de l'opérateur via SNMP.

Les sections suivantes détaillent un mode de réalisation de la présente invention appliquée à la partie de MIB de référence 1.3.6.1.2.1.37 dans l'arbre d'enregistrement d'objets spécifié par l'IETF, pour Internet Engineering Task Force' dans un RFC 1695, pour 'Request for Comment'. Cette partie de MIB est appelée dans les sections suivantes MIB ATM..

Les informations de synchronisation fournies préalablement au dispositif et à l'équipement associent un identifiant de patron égal à 309 et l'objet correspondant à une table déterminée de la MIB ATM. La table 1 illustre un patron de ticket de synchronisation correspondant selon un mode de réalisation de la présente invention.

**Table 1**

| 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Flowset ID = 0 | | | | | | | | | | | | | | | |
| Length = 60 bytes | | | | | | | | | | | | | | | |
| Identifiant de patron spécifique de synchronisation= 100 (valeur arbitraire) | | | | | | | | | | | | | | | |
| Nombre de champs d'information : 2 | | | | | | | | | | | | | | | |
| champ 1 : identifiant de patron | | | | | | | | | | | | | | | |
| Length : 4 | | | | | | | | | | | | | | | |
| champ 2 : référence d'un objet | | | | | | | | | | | | | | | |
| Length : 32 | | | | | | | | | | | | | | | |

Un tel patron peut être fourni au dispositif et à l'équipement par une entité extérieure, ou il peut encore être connu préalablement. On note qu'un tel patron indique te format et la sémantique des tickets de synchronisation.

La table 2 représente un ticket de synchronisation, selon un mode de réalisation de l'invention, faisant correspondre l'objet relatif à la MIB ATM avec un identifiant numérique de patron respectif égal à 309.

**Table 2**

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 |
|---|---|---|---|---|---|---|---|---|---|---|---|---|---|---|---|---|---|---|---|---|---|---|---|---|---|---|---|---|---|---|---|
| Flowset ID = 100 (MIB patron) | | | | | | | | | | | | | | | | Length = 38 bytes | | | | | | | | | | | | | | | |
| 309 | | | | | | | | | | | | | | | | | | | | | | | | | | | | | | | |
| 1.3. | | | | | | | | | | | | | | | | | | | | | | | | | | | | | | | |
| 6.1. | | | | | | | | | | | | | | | | | | | | | | | | | | | | | | | |
| 2.1. | | | | | | | | | | | | | | | | | | | | | | | | | | | | | | | |
| 37 | | | | | | | | | | | | | | | | | | | | | | | | | | | | | | | |
| ... | | | | | | | | | | | | | | | | | | | | | | | | | | | | | | | |
| ... | | | | | | | | | | | | | | | | | | | | | | | | | | | | | | | |
| ... | | | | | | | | | | | | | | | | | | | | | | | | | | | | | | | |
| ... | | | | | | | | | | | | | | | | | | | | | | | | | | | | | | | |

On note que l'identifiant du patron compris dans les informations de synchronisation peut être choisi de manière aléatoire.

La table 3 illustre un patron correspondant à cette table de la MIB ATM selon un mode de réalisation de la présente invention.

**Table 3**

| 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| Flowset ID = 0 | | | | | | | | | | | | | | | |
| Length = 32 bytes | | | | | | | | | | | | | | | |
| Identifiant du patron = 309 (aa15VccTable) | | | | | | | | | | | | | | | |
| Nombre de champs : 6 | | | | | | | | | | | | | | | |
| Champ 1 : ifindex | | | | | | | | | | | | | | | |
| Length : 4 | | | | | | | | | | | | | | | |
| Champ 2 : aa15VccVpi | | | | | | | | | | | | | | | |
| Length : 2 | | | | | | | | | | | | | | | |
| Champ 3 : aa15VccVci | | | | | | | | | | | | | | | |
| Length : 2 | | | | | | | | | | | | | | | |
| Champ 4 : aa15VccCrcErrors | | | | | | | | | | | | | | | |
| Length : 4 | | | | | | | | | | | | | | | |
| Champ 5 : aa15VccSarTimeOuts | | | | | | | | | | | | | | | |
| Length : 4 | | | | | | | | | | | | | | | |
| Champ 6 : aal15VccOverSizedSDUs | | | | | | | | | | | | | | | |
| Length : 4 | | | | | | | | | | | | | | | |

Le premier champ 'FlowsetID' égal à 0 indique un patron. Le second champ indique la longueur du patron. Le troisième champ comprend l'identifiant numérique 309 affecté au patron. On note que le champ 1 correspond à un champ d'index, puisqu'une telle table peut être instanciée, chaque index définissant une des instances de cette table. Dans un mode de réalisation, ce champ 1 peut correspond à un objet d'une autre table. Il est présent parce qu'il appartient à la table aal5VccTable et à une clé d'identification d'un Vcc parmi les instances des Vcc d'une table aal5VccTable. Aal5VccVpi et aal5VccVci complètent cette clé.

Les champs suivants définissent la sémantique et le format des données des tickets qui vont suivre relativement à ce patron.

Lorsque le dispositif d'administration 11 reçoit le patron d'identifiant 309, le traducteur 15 fait correspondre ce patron à la référence de l'objet correspondant. En se reportant à la spécification MIB, on fait alors correspondre le patron reçu à la table correspondante de la MIB ATM.

La table 4 représente un ticket de données relatif au patron représenté par la table 3.

**Table 4**

| Flowset ID = 309 (aa15VccTable) | Length : 12 |
|---|---|
| 12 | |
| 100 | 1000 |
| 15432 | |
| 456 | |
| 567 | |

Le premier et le second champs de la première ligne indiquent respectivement l'identification du patron correspondant à ce ticket de données et la longueur de ce ticket de données.

Lorsque l'objet est instancié, plusieurs tickets de données peuvent correspondre à cet objet, un ticket par instance. La deuxième et la troisième ligne du ticket permettent d'identifier l'instance de l'objet concernée. Puis, les valeurs suivantes correspondent successivement aux champs indiqués dans le patron de la table 4.

De préférence, un ticket de données correspond à une seule instance d'un objet spécifié.

Les sections suivantes détaillent alors une traduction des tickets de données reçues par le traducteur d'un dispositif d'administration dans un mode de réalisation de la présente invention.

Ainsi, le traducteur reçoit des tickets de données tels que décrits précédemment. Soit la spécification de la partie MIB concernée est disponible pour le traducteur, soit elle est chargée par le traducteur depuis une unité extérieure.

Le dispositif construit un « arbre de nommage » des objets à partir de la spécification de la partie de MIB. Associé à cet arbre de nommage des objets, le dispositif d'administration construit une base de données où seront stockées les données reçues et traduites pour les rendre accessibles via SNMP.

De préférence, les données relatives à des objets individuels et les données relatives à des instances d'objets, sous forme de tables, ne sont pas gérées de la même manière par le dispositif d'administration.

Ainsi, le traducteur peut créer, à partir de l'arbre de nommage et des informations de synchronisation, une première table relative aux données correspondant aux objets individuels et une seconde table relative aux données correspondant aux objets instanciés.

Sur la base de ces tables, sur réception de patrons et de tickets de données, le traducteur est en mesure d'interpréter les données reçues de l'équipement et de les stocker selon la MIB ATM afin de les rendre accessibles via le protocole SNMP.

Quelle que soit la manière dont chaque patron est affecté d'un identifiant, dès lors que l'équipement et le dispositif d'administration partagent des informations de synchronisation, ils sont en mesure d'échanger des données d'administration, relatives aux informations de synchronisation, de la façon décrite précédemment.

De manière avantageuse, un mode de réalisation permet de synchroniser l'équipement et le dispositif d'administration plusieurs-fois le cas échéant.

On note que dans le cas où l'on utilise un protocole de type IPFIX pour transmettre les données d'administration à travers le réseau, on peut avantageusement utiliser le patron « Options Template Flowset » défini par IPFIX en tant que patron de synchronisation selon un mode de la présente invention.

La présente invention permet donc d'accroître la flexibilité d'un procédé d'administration dans un réseau.

Avantageusement, elle permet également de fabriquer des équipements de réseau à administrer simples et peu coûteux.

De plus, un mode de réalisation de l'invention est très simple à mettre en oeuvre dans des réseaux existants.

## Revendications

1. Procédé pour administrer un équipement (12) par un dispositif d'administration (11) dans un réseau (13) de communication;
ledit dispositif d'administration gérant une base de données d'administration (14) sous la forme d'objets référencés (202) selon une spécification de référence (16);
**caractérisé en ce que** ledit équipement échange des données d'administration sous la forme de structures de données indiquées par des patrons, chacun correspondant respectivement à un objet référencé et étant affecté d'un identifiant (206) respectif;
suivant lequel, pour administrer un objet donné, le dispositif d'administration et l'équipement mémorisent au moins une même information de synchronisation associant la référence de l'objet donné et l'identifiant du patron correspondant;
ledit procédé, pour administrer l'objet donné, comprenant les étapes suivantes :
- transmettre, depuis l'équipement à destination du dispositif d'administration, le patron (205) correspondant affecté de l'identifiant respectif, et au moins un ticket (401) de données ayant une structure indiquée par ledit patron et affecté dudit identifiant;
- traduire le patron reçu par le dispositif d'administration en l'objet référencé respectif en fonction de ladite information de synchronisation; puis, sur la base de la traduction, stocker les données du ticket reçu dans la base de données d'administration du dispositif.

2. Procédé selon la revendication 1, comprenant en outre, pour administrer l'objet donné, les étapes suivantes :
- traduire, par le dispositif d'administration, l'objet (201) donné en le patron (205) respectif affecté de l'identifiant respectif, en fonction de l'information de synchronisation;
- transmettre, depuis le dispositif d'administration à destination de l'équipement, ledit patron affecté de l'identifiant (206) respectif, et au moins un ticket (401) de données ayant une structure indiquée par ledit patron et affecté dudit identifiant ;
- recevoir et stocker sur l'équipement les données du ticket reçu, directement en fonction du patron affecté du même identifiant que ledit ticket.

3. Procédé selon l'une quelconque des revendications précédentes, suivant lequel l'information de synchronisation est reçue et mémorisée au démarrage du dispositif d'administration et/ou au démarrage de l'équipement.

4. Procédé selon l'une quelconque des revendications précédentes, suivant lequel l'information de synchronisation est reçue et mémorisée périodiquement par le dispositif d'administration et/ou l'équipement.

5. Procédé selon l'une quelconque des revendications précédentes, suivant lequel l'équipement indique au dispositif d'administration, respectivement le dispositif d'administration indique à l'équipement, l'information de synchronisation selon les étapes suivantes :
- depuis l'équipement, respectivement depuis le dispositif d'administration, transmettre un patron de synchronisation (501) indiquant un champ relatif à une référence d'objet et un autre champ relatif à un identifiant de patron ; et transmettre un ticket de synchronisation (502) comprenant ladite information de synchronisation ;
- mémoriser (503) les données du ticket de synchronisation reçues par le dispositif d'administration, respectivement par l'équipement.

6. Procédé selon l'une quelconque des revendications précédentes, suivant lequel l'équipement gère en outre des données d'administration sous la forme d'objets à administrer référencés selon la spécification de référence ; et suivant lequel l'équipement traduit en outre, avant l'étape de transmission, l'objet donné en le patron correspondant affecté de l''identifiant respectif en fonction des informations de synchronisation.

7. Système d'administration d'équipement dans un réseau de communication comprenant, un dispositif d'administration (11) gérant une base de données d'administration sous la forme d'objets à administrer, lesdits objets étant référencés selon une spécification de référence (16),
**caractérisé en ce qu'**il comprend en outre un équipement (12) administré échangeant des données d'administration sous la forme de structures de données indiquées par des patrons, chacun correspondant respectivement à un objet référencé et étant affecté d'un identifiant respectif;
ledit dispositif d'administration et l'équipement administré comprenant chacun :
- une mémoire (101,102) adaptée pour mémoriser au moins une information de synchronisation associant l'identifiant d'un patron et la référence d'un objet correspondant;
- une unité d'interface (18,19) adaptée pour transmettre et/ou recevoir un patron affecté d'un identifiant et au moins un ticket de données ayant une structure indiquée par ledit patron affecté dudit identifiant;
et ledit dispositif comprenant en outre :
- un traducteur (15) comprenant des moyens agencés pour traduire un patron reçu en l'objet référencé respectif en fonction de l'identifiant dudit patron et de ladite information de synchronisation.

8. Système selon la revendication 7, dans lequel le traducteur (15) comprend en outre des moyens agencés pour traduire un objet à administrer en un patron respectif affecté d'un identifiant en fonction des informations de synchronisation.

9. Traducteur (15) compris dans un dispositif d'administration d'un équipement ;
**caractérisé en ce qu'**il est adapté pour effectuer une traduction entre un patron (205) indiquant des structures de données gérées par l'équipement et un objet spécifié selon une spécification de référence (16) ;
ladite traduction étant effectuée en fonction, d'une part, d'un identifiant du patron ou d'une référence de l'objet et, d'autre part, d'une information de synchronisation associant ledit identifiant du patron et la référence de l'objet correspondant ;
ladite information de synchronisation étant stockée dans une mémoire (101) du dispositif d'administration.

10. Dispositif d'administration (11) de réseau gérant une base de données d'administration sous la forme d'objets à administrer référencés selon une spécification de référence (16) ;
**caractérisé en ce qu'**il est adapté pour administrer un équipement échangeant des données d'administration sous la forme de structures de données indiquées par des patrons, chacun correspondant respectivement à un objet référencé et étant affecté d'un identifiant respectif;
ledit dispositif comprenant :
- une mémoire (101,102) adaptée pour mémoriser des informations de synchronisation associant l'identifiant d'un patron et la référence d'un objet correspondant;
- une unité d'interface (18,19) adaptée pour transmettre et/ou recevoir un patron affecté d'un identifiant et au moins un ticket de données ayant une structure indiquée par ledit patron et affecté dudit identifiant;
- un traducteur (15) adapté pour traduire un patron reçu en l'objet référencé respectif en fonction de l'identifiant dudit patron et des informations de synchronisation.

11. Dispositif (11) d'administration selon la revendication 10, dans lequel le traducteur est adapté pour traduire en outre un objet à administrer en un patron respectif affecté d'un identifiant en fonction des informations de synchronisation.

12. Equipement (12) de réseau destiné à être administré par un dispositif d'administration gérant une base de données d'administration sous la forme d'objets à administrer, lesdits objets étant référencés selon une spécification de référence (16);
**caractérisé en ce qu'**il échange des données d'administration sous la forme de structures de données indiquées par des patrons, chacun correspondant respectivement à un objet référencé et étant affecté d'un identifiant respectif;
ledit équipement comprenant :
- une mémoire (101,102) pour mémoriser des informations de synchronisation associant l'identifiant d'un patron et la référence d'un objet correspondant;
- une unité d'interface (18,19) pour transmettre et/ou recevoir un patron affecté d'un identifiant et au moins un ticket de données ayant une structure indiquée par ledit patron et affecté dudit identifiant.

13. Equipement selon la revendication 12, dans lequel des données d'administration sont gérées sous la forme d'objets à administrer référencés selon la spécification de référence ;
ledit équipement comprenant en outre un traducteur (15) ayant des moyens agencés pour traduire un objet à administrer en un patron respectif et/ou un patron respectif en un objet à administrer, ledit patron étant affecté d'un identifiant.

## Claims

1. Method for managing equipment (12) through a management device (11) in a communications network (13);
said management device managing a management database (14) with data in the form of referenced objects (202) according to a reference specification (16);
**characterized in that** said equipment exchanges management data in the form of data structures indicated by templates, each respectively corresponding to a referenced object and being assigned a respective identifier (206);
according to which, in order to manage a given object, the management device and the equipment store at least one piece of identical synchronization information associating the reference of the given object and the identifier of the corresponding template;
said method, in order to manage the given object, comprising the following steps:
- transmitting, from the equipment to the management device, the corresponding template (205) assigned the respective identifier and at least one data ticket (401) having a structure indicated by said template and assigned with said identifier;
- translating the template received by the management device into the respective referenced object as a function of said synchronization information; then, on the basis of the translation, storing the data from the received ticket in the management database of the device.

2. Method according to Claim 1, furthermore comprising, in order to manage the given object, the following steps:
- translating, by the management device, the given object (201) into the respective template (205) assigned the respective identifier, as a function of the synchronization information;
- transmitting, from the management device to the equipment, said template assigned the respective identifier (206) and at least one data ticket (401) having a structure indicated by said template and assigned said identifier;
- receiving and storing on the equipment the data from the received ticket, directly as a function of the template assigned the same identifier as said ticket.

3. Method according to either one of the preceding claims, according to which the synchronization information is received and stored on starting the management device and/or on starting the equipment.

4. Method according to any one of the preceding claims, according to which the synchronization information is received and stored periodically by the management device and/or the equipment.

5. Method according to any one of the preceding claims, according to which the equipment indicates to the management device, or the management device indicates to the equipment respectively, the synchronization information in the following steps:
- from the equipment, or from the management device respectively, transmitting a synchronization template (501) indicating a field relating to an object reference and another field relating to a template identifier; and transmitting a synchronization ticket (502) comprising said synchronization information;
- storing (503) the data from the synchronization ticket received by the management device, or by the equipment respectively.

6. Method according to any one of the preceding claims, according to which the equipment furthermore manages management data in the form of objects to be managed that are referenced according to the reference specification; and
according to which the equipment furthermore translates, before the transmission step, the given object into the corresponding template assigned the respective identifier as a function of the synchronization information.

7. System for managing equipment in a communications network, comprising a management device (11) managing a management database in the form of objects to be managed, said objects being referenced according to a reference specification (16),
**characterized in that** it furthermore comprises managed equipment (12) exchanging management data in the form of data structures indicated by templates, each respectively corresponding to a referenced object and being assigned a respective identifier;
said management device and managed equipment each comprising:
- memory (101, 102) designed for storing at least one piece of synchronization information associating the template identifier and the reference of a corresponding object;
- an interface unit (18, 19) designed for transmitting and/or receiving a template assigned an identifier and at least one data ticket having a structure indicated by said template assigned said identifier;
and said device furthermore comprising:
- a translator (15) comprising means arranged to translate a received template into the respective referenced object as a function of the identifier of said template and of said synchronization information.

8. System according to Claim 7, in which the translator (15) furthermore comprises means arranged to translate an object to be managed into a respective template assigned an identifier as a function of the synchronization information.

9. Translator (15) comprised in a management device of equipment,
**characterized in that** it is designed to carry out a translation of a template (205) indicating data structures managed by the equipment into an object referenced according to a reference specification (16);
said translation being carried out as a function of, on the one hand, a template identifier and, on the other hand, a piece of synchronization information associating said template identifier and the reference of the corresponding object;
said synchronization information being stored in a memory (101) of the management device.

10. Network management device (11) managing a management database in the form of objects to be managed referenced according to a reference specification (16);
**characterized in that** it is designed to manage equipment exchanging management data in the form of data structures indicated by templates, each respectively corresponding to a referenced object and being assigned a respective identifier;
said device comprising:
- memory (101, 102) designed for storing synchronization information associating the template identifier and the reference of a corresponding object;
- an interface unit (18, 19) designed for transmitting and/or receiving a template assigned an identifier and at least one data ticket having a structure indicated by said template and assigned said identifier;
- a translator (15) designed to translate a received template into the respective referenced object as a function of the identifier of said template and of the synchronization information.

11. Management device (11) according to Claim 10, in which the translator is designed furthermore to translate an object to be managed into a respective template assigned an identifier as a function of the synchronization information.

12. Network equipment (12) intended to be managed by a management device managing a management database in the form of objects to be managed, said objects being referenced according to a reference specification (16);
**characterized in that** it exchanges management data in the form of data structures indicated by templates, each respectively corresponding to a referenced object and being assigned a respective identifier;
said equipment comprising:
- memory (101, 102) for storing synchronization information associating the template identifier and the reference of a corresponding object;
- an interface unit (18, 19) for transmitting and/or receiving a template assigned an identifier and at least one data ticket having a structure indicated by said template and assigned said identifier.

13. Equipment according to Claim 12, in which management data are managed in the form of objects to be managed referenced according to the reference specification;
said equipment furthermore comprising a translator (15) having means arranged to translate an object to be managed into a respective template and/or a respective template into an object to be managed, said template being assigned an identifier.

## Patentansprüche

1. Verfahren zur Verwaltung einer Einrichtung (12) durch eine Verwaltungsvorrichtung (11) in einem Kommunikationsnetz (13);
wobei die Verwaltungsvorrichtung eine Verwaltungsdatenbank (14) in Form von gemäß einer Referenzspezifikation (16) referenzierten Objekten (202) verwaltet;
**dadurch gekennzeichnet, dass** die Einrichtung Verwaltungsdaten in Form von Datenstrukturen austauscht, die von Schablonen angegeben werden, welche je einem referenzierten Objekt entsprechen und mit einer jeweiligen Kennung (206) versehen sind;
gemäß dem, zur Verwaltung eines gegebenen Objekts, die Verwaltungsvorrichtung und die Einrichtung mindestens die gleiche Synchronisationsinformation speichern, die die Referenz des gegebenen Objekts und die Kennung der entsprechenden Schablone vereint; wobei das Verfahren zur Verwaltung des gegebenen Objekts die folgenden Schritte aufweist:
- Übertragen, ausgehend von der Einrichtung an die Verwaltungsvorrichtung, der entsprechenden mit der jeweiligen Kennung versehenen Schablone (205) und mindestens eines Daten-Tickets (401), das eine von der Schablone angegebene Struktur hat und mit der Kennung versehen ist;
- Umsetzen der von der Verwaltungsvorrichtung empfangenen Schablone in das jeweilige referenzierte Objekt in Abhängigkeit von der Synchronisationsinformation; dann, auf der Basis der Umsetzung, Speichern der Daten des empfangenen Tickets in der Verwaltungsdatenbank der Vorrichtung.

2. Verfahren nach Anspruch 1, das außerdem zur Verwaltung des gegebenen Objekts die folgenden Schritte aufweist:
- Umsetzen, durch die Verwaltungsvorrichtung, des gegebenen Objekts (201) in die jeweilige mit der jeweiligen Kennung versehene Schablone (205) in Abhängigkeit von der Synchronisationsinformation;
- Übertragen, ausgehend von der Verwaltungsvorrichtung an die Einrichtung, der mit der jeweiligen Kennung (206) versehenen Schablone und mindestens eines Daten-Tickets (401), das eine von der Schablone angegebene Struktur hat und mit der Kennung versehen ist;
- Empfangen und Speichern, in der Einrichtung, der Daten des empfangenen Tickets, direkt in Abhängigkeit von der mit der gleichen Kennung wie das Ticket versehenen Schablone.

3. Verfahren nach einem der vorhergehenden Ansprüche, gemäß dem die Synchronisationsinformation beim Start der Verwaltungsvorrichtung und/oder beim Start der Einrichtung empfangen und gespeichert wird.

4. Verfahren nach einem der vorhergehenden Ansprüche, gemäß dem die Synchronisationsinformation periodisch von der Verwaltungsvorrichtung und/oder der Einrichtung empfangen und gespeichert wird.

5. Verfahren nach einem der vorhergehenden Ansprüche, gemäß dem die Einrichtung der Verwaltungsvorrichtung bzw. die Verwaltungsvorrichtung der Einrichtung die Synchronisationsinformation gemäß den folgenden Schritten angibt:
- von der Einrichtung bzw. von der Verwaltungsvorrichtung, Übertragen einer Synchronisationsschablone (501), die ein Feld bezüglich einer Objektreferenz und ein anderes Feld bezüglich einer Schablonenkennung angibt; und Übertragen eines Synchronisationstickets (502), das die Synchronisationsinformation enthält;
- Speichern (503) der Daten des Synchronisationstickets, die von der Verwaltungsvorrichtung bzw. von der Einrichtung empfangen werden.

6. Verfahren nach einem der vorhergehenden Ansprüche, gemäß dem die Einrichtung außerdem Verwaltungsdaten in Form von zu verwaltenden Objekten verwaltet, die gemäß der Referenzspezifikation referenziert sind; und gemäß dem die Einrichtung außerdem vor dem Übertragungsschritt das gegebene Objekt in die entsprechende mit der jeweiligen Kennung versehene Schablone in Abhängigkeit von den Synchronisationsinformationen umsetzt.

7. System zur Verwaltung einer Einrichtung in einem Kommunikationsnetz, das eine Verwaltungsvorrichtung (11) aufweist, die eine Verwaltungsdatenbank in Form von zu verwaltenden Objekten verwaltet, wobei die Objekte gemäß einer Referenzspezifikation (16) referenziert sind,
**dadurch gekennzeichnet, dass** es außerdem eine verwaltete Einrichtung (12) aufweist, die Verwaltungsdaten in Form von Datenstrukturen austauscht, die von Schablonen angegeben werden, die je einem referenzierten Objekt entsprechen und mit einer jeweiligen Kennung versehen sind;
wobei die Verwaltungsvorrichtung und die verwaltete Einrichtung je aufweisen:
- einen Speicher (101, 102), der geeignet ist, um mindestens eine Synchronisationsinformation zu speichern, die die Kennung einer Schablone und die Referenz eines entsprechenden Objekts vereint;
- eine Schnittstelleneinheit (18, 19), die geeignet ist, um eine mit einer Kennung versehene Schablone und mindestens ein Daten-Ticket zu übertragen und/oder zu empfangen, das eine Struktur hat, die von der mit der Kennung versehenen Schablone angegeben wird;
und die Vorrichtung weiter aufweist:
- einen Umsetzer (15), der Mittel aufweist, die eingerichtet sind, um eine empfangene Schablone in das jeweilige referenzierte Objekt in Abhängigkeit von der Kennung der Schablone und der Synchronisationsinformation umzusetzen.

8. System nach Anspruch 7, bei dem der Umsetzer (15) außerdem Mittel aufweist, die eingerichtet sind, um ein zu verwaltendes Objekt in eine jeweilige mit einer Kennung versehene Schablone in Abhängigkeit von den Synchronisationsinformationen umzusetzen.

9. Umsetzer (15), der in einer Verwaltungsvorrichtung einer Einrichtung enthalten ist,
**dadurch gekennzeichnet, dass** er geeignet ist, um eine Umsetzung einer Schablone (205), die von der Einrichtung verwaltete Datenstrukturen angibt, in ein gemäß einer Referenzspezifikation (16) referenziertes Objekt durchzuführen;
wobei die Umsetzung in Abhängigkeit einerseits von einer Kennung der Schablone und andererseits von einer Synchronisationsinformation durchgeführt wird, die die Kennung der Schablone und die Referenz des entsprechenden Objekts vereint;
wobei die Synchronisationsinformation in einem Speicher (101) der Verwaltungsvorrichtung gespeichert ist.

10. Netzverwaltungsvorrichtung (11), die eine Verwaltungsdatenbank in Form von gemäß einer Referenzspezifikation (16) referenzierten zu verwaltenden Objekten verwaltet;
**dadurch gekennzeichnet, dass** sie geeignet ist, um eine Einrichtung zu verwalten, die Verwaltungsinformationen in Form von Datenstrukturen austauscht, die von Schablonen angegeben werden, die je einem referenzierten Objekt entsprechen und mit einer jeweiligen Kennung versehen sind;
wobei die Vorrichtung aufweist:
- einen Speicher (101, 102), der geeignet ist, um Synchronisationsinformationen zu speichern, die die Kennung einer Schablone und die Referenz eines entsprechenden Objekts vereinen;
- eine Schnittstelleneinheit (18, 19), die geeignet ist, um eine mit einer Kennung versehene Schablone und mindestens ein Daten-Ticket, das eine von der Schablone angegebene Struktur hat und mit der Kennung versehen ist, zu übertragen und/oder zu empfangen;
- einen Umsetzer (15), der geeignet ist, um eine empfangene Schablone in das jeweilige referenzierte Objekt in Abhängigkeit von der Kennung der Schablone und den Synchronisationsinformationen umzusetzen.

11. Verwaltungsvorrichtung (11) nach Anspruch 10, bei der der Umsetzer geeignet ist, um außerdem ein zu verwaltendes Objekt in eine jeweilige mit einer Kennung versehene Schablone in Abhängigkeit von den Synchronisationsinformationen umzusetzen.

12. Netzeinrichtung (12), die dazu bestimmt ist, von einer Verwaltungsvorrichtung verwaltet zu werden, die eine Verwaltungsdatenbank in Form von zu verwaltenden Objekten verwaltet, wobei die Objekte gemäß einer Referenzspezifikation (16) referenziert sind;
**dadurch gekennzeichnet, dass** sie Verwaltungsdaten in Form von Datenstrukturen austauscht, die von Schablonen angegeben werden, die je einem referenzierten Objekt entsprechen und mit einer jeweiligen Kennung versehen sind;
wobei die Einrichtung aufweist:
- einen Speicher (101, 102), um Synchronisationsinformationen zu speichern, die die Kennung einer Schablone und die Referenz eines entsprechenden Objekts vereinen;
- eine Schnittstelleneinheit (18, 19) zum Übertragen und/oder Empfangen einer mit einer Kennung versehenen Schablone und mindestens eines Daten-Tickets, das eine von der Schablone angegebene Struktur hat und mit der Kennung versehen ist.

13. Einrichtung nach Anspruch 12, bei der die Verwaltungsdaten in Form von zu verwaltenden Objekten verwaltet werden, die gemäß der Referenzspezifikation referenziert sind;
wobei die Einrichtung außerdem einen Umsetzer (15) aufweist, der Mittel hat, die eingerichtet sind, um ein zu verwaltendes Objekt in eine jeweilige Schablone und/oder eine jeweilige Schablone in ein jeweiliges zu verwaltendes Objekt umzusetzen,
wobei die Schablone mit einer Kennung versehen ist.
